# DEMANDE DE BREVET EUROPEEN

(11) **EP 4 043 272 A1**
(43) Date de publication de la demande: **17.08.2022**
(21) Numéro de dépôt: 22155948.7
(22) Date de dépôt: 09.02.2022
(51) Int. Cl.: B60L 50/53

(54) **VÉHICULE DE TRACTION EMBARQUANT UN DISPOSITIF DE STOCKAGE D' ÉNERGIE ÉLECTRIQUE**

(30) Priorité: 10.02.2021 FR 2101251
(71) Demandeur: ALSTOM Holdings, 93400 Saint-Ouen-sur-Seine (FR)
(72) Inventeur: ROUILLE, Bruno, 65200 Ordizan (FR)
(74) Mandataire: Lavoix

(57) **Abrégé**

Ce véhicule (2) comporte : des première et seconde chaînes d'alimentation (10, 20), comportant respectivement un convertisseur (13, 23) pour convertir une tension monophasée en une tension continue, un onduleur (15, 25) pour convertir une tension continue en une tension pour alimenter un moteur (16, 26), et un bus continu (14, 24) entre la sortie du convertisseur (13, 23) et l'entrée de l'onduleur (15, 25) ; un dispositif monophasé (30) pour appliquer une tension monophasée en entrée des convertisseurs (13, 23) ; et une liaison électrique entre les bus continus (14, 24) des première et seconde chaines d'alimentation (10, 20). Ce véhicule (2) comporte un dispositif de stockage d'énergie électrique (60) connecté en entrée du second convertisseur (23), via un interrupteur (66) qui dans un état « bas » connecte le dispositif de stockage d'énergie électrique (60) en entrée du second convertisseur (23), la tension monophasée appliquée par le dispositif monophasé (30) en entrée du premier convertisseur (13) soit convertie en une tension continue sur le premier bus continu ; que la tension continue sur le premier bus continu soit appliquée au second bus continu à travers la liaison électrique ; et que la tension continue sur le second bus continu soit convertie par le second convertisseur (23) en une tension continue de recharge du dispositif de stockage d'énergie électrique (60).

## Description

La présente invention a pour domaine celui des véhicules de traction, et notamment des véhicules de traction bi-tensions (ou bi-courants), propres à capter soit une puissance électrique monophasée au moyen d'un premier pantographe dédié, soit une puissance électrique continue au moyen d'un second pantographe dédié.

On connaît des locomotives, notamment bi-tensions, qui embarquent également un dispositif de stockage d'énergie électrique. Ce dernier est propre à délivrer une puissance électrique permettant, après adaptation, d'alimenter les moteurs de traction de la locomotive. Il s'agit par exemple de batteries, de supercapacités, de volants d'inertie , de piles à combustibles, etc. ou d'une combinaison de tels moyens.

Lorsqu'une telle locomotive circule le long d'une voie ferroviaire équipée d'une ligne aérienne de contact, mais qu'un tronçon de cette dernière n'est pas alimenté (à la suite par exemple d'un dysfonctionnement), la locomotive est alors capable de franchir en autonomie la section de voie correspondante.

Une telle locomotive peut avantageusement circuler le long d'itinéraires intégrant des sections de voie qui ne sont pas équipées de lignes aériennes de contact, en particulier des sections de voie pour lesquelles on utilisait jusqu'à présent des locomotives diesels. Incidemment, la mise en œuvre de telles locomotives permet de mettre en service de nouvelles sections de voie sans avoir besoin de les électrifier. Ceci a pour avantage de réduire les coûts d'infrastructure.

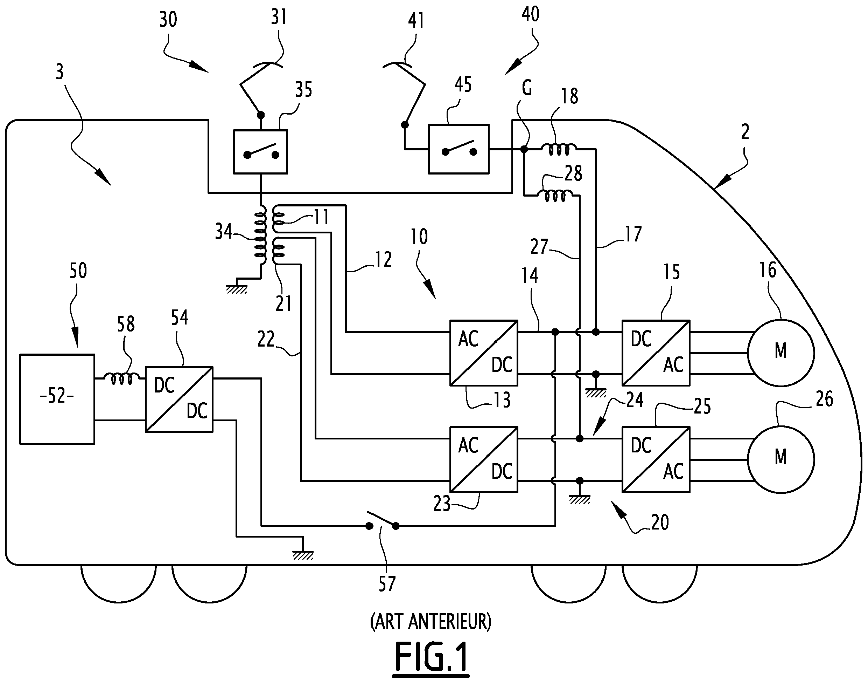

On connaît des locomotives embarquant un moyen de stockage d'énergie électrique. Comme représenté sur la figure 1, le circuit de puissance 3 de locomotive 2 comprend un dispositif de stockage d'énergie électrique 50 comportant une batterie 52, une inductance 58 et un convertisseur continu - continu 54 dédié. Le convertisseur 54 est reliée aux bus continus, 14 et 24, de chacune des chaînes d'alimentation en puissance électrique des moteurs de traction de la locomotive 2, via un interrupteur 57. Le convertisseur 54 a pour fonction, en mode traction sur batterie, d'adapter le niveau de tension continue délivré par la batterie 52, au niveau de tension continue requis sur les bus continus, 14, 24.

Le convertisseur continu - continu 54 a également pour fonction, en mode recharge de batterie, de convertir le niveau de tension continue sur les bus continus 14, 24, au niveau de tension continue requis pour la recharge de la batterie 52.

Le but de l'invention est alors de proposer une amélioration aux véhicules à traction électrique et notamment aux locomotives bi-tensions embarquant un dispositif de stockage d'énergie électrique.

Pour cela l'invention a pour objet un véhicule de traction électrique comportant : un premier moteur connecté à une première chaîne d'alimentation en puissance électrique, la première chaîne d'alimentation comportant : un premier convertisseur adapté pour fonctionner en convertisseur monophasé - continu pour convertir une tension monophasée appliquée en entrée en une tension continue délivrée en sortie ; un premier onduleur propre à convertir une tension continue appliquée en entrée en une tension délivrée en sortie pour alimenter le premier moteur fonctionnant en traction ; et un premier bus continu connecté entre la sortie du premier convertisseur et l'entrée du premier onduleur ; un second moteur connecté à une seconde chaîne d'alimentation, la seconde chaîne d'alimentation comportant : un second convertisseur adapté pour fonctionner en convertisseur monophasé - continu pour convertir une tension monophasée appliquée en entrée en une tension continue délivrée en sortie ; un second onduleur propre à convertir une tension continue appliquée en entrée en une tension délivrée en sortie pour alimenter le second moteur fonctionnant en traction ; et un second bus continu connecté entre la sortie du second convertisseur et l'entrée du second onduleur ; un dispositif monophasé adapté pour collecter une puissance auprès d'une source monophasée externe au véhicule de traction électrique et appliquer une tension monophasée en entrée du premier et/ou du second convertisseur des première et seconde chaînes d'alimentation ; et une liaison électrique entre les premier et second bus continus des première et seconde chaines d'alimentation, caractérisé en ce que le véhicule de traction électrique comporte, en outre, un dispositif de stockage d'énergie électrique connecté en entrée du second convertisseur, via un interrupteur, l'interrupteur étant soit dans un état « haut » pour connecter le dispositif monophasé en entrée du second convertisseur, soit dans un état « bas » pour connecter le dispositif de stockage d'énergie électrique en entrée du second convertisseur, le véhicule de traction électrique étant capable de fonctionner dans un mode de recharge du dispositif de stockage d'énergie électrique en pilotant l'interrupteur dans l'état « bas », de sorte qu'une tension monophasée appliquée par le dispositif monophasé en entrée du premier convertisseur fonctionnant en monophasé - continu soit convertie en une tension continue sur le premier bus continu ; que la tension continue sur le premier bus continu soit appliquée au second bus continu à travers la liaison électrique entre les premier et second bus continus ; et que la tension continue sur le second bus continu soit convertie par le second convertisseur fonctionnant en continu - continu inverse, en une tension continue de recharge du dispositif de stockage d'énergie électrique.

Suivant des modes particuliers de réalisation, ce véhicule de traction comporte une ou plusieurs des caractéristiques suivantes, prises isolément ou suivant toutes les combinaisons techniquement possibles :
- l'interrupteur entre le dispositif de stockage d'énergie électrique et le second convertisseur étant un second interrupteur, le dispositif de stockage d'énergie électrique est connecté en entrée du premier convertisseur, via un premier interrupteur, le premier interrupteur étant soit dans un état « haut » pour connecter le dispositif monophasé en entrée du premier convertisseur, soit dans un état « bas » pour connecter le dispositif de stockage d'énergie en entrée du premier convertisseur, le véhicule de traction électrique opérant dans le mode de recharge du dispositif de stockage d'énergie électrique : soit en pilotant le premier interrupteur dans l'état « haut » et le second interrupteur dans l'état « bas », de sorte qu'une tension monophasée appliquée par le dispositif monophasé en entrée du premier convertisseur fonctionnant en monophasé - continu soit convertie en une tension continue sur le premier bus continu, que la tension continue sur le premier bus continu soit appliquée au second bus continu à travers la liaison électrique entre les premier et second bus continus, et que la tension continue sur le second bus continu soit convertie par le second convertisseur fonctionnant en continu - continu inverse en une tension continue de recharge du dispositif de stockage d'énergie électrique ; soit en pilotant le premier interrupteur dans l'état « bas » et le second interrupteur dans l'état « haut », de sorte qu'une tension monophasée appliquée par le dispositif monophasé en entrée du second convertisseur fonctionnant en monophasé - continu soit convertie en une tension continue sur le second bus continu, que la tension continue sur le second bus continu soit appliquée au premier bus continu à travers la liaison électrique entre les premier et second bus continus, et que la tension continue sur le premier bus continu soit convertie par le premier convertisseur fonctionnant en continu - continu inverse, en une tension continue de recharge du dispositif de stockage d'énergie électrique.
- le véhicule est adapté pour fonctionner dans un mode de traction en utilisant une puissance délivrée par le dispositif de stockage d'énergie électrique afin d'alimenter les premier et second moteurs, le véhicule de traction électrique comportant un dispositif d'isolement monophasé permettant d'isoler le dispositif monophasé des premier et second convertisseurs et les premier et second interrupteurs étant pilotés dans l'état « bas » de manière à appliquer une tension continue délivrée par le dispositif de stockage d'énergie en entrée des premier et second convertisseurs fonctionnant en convertisseur continu - continu direct.

- le dispositif de stockage d'énergie électrique est dépourvu de convertisseur continu-continu dédié.
- le dispositif de stockage d'énergie électrique comporte une batterie, une supercapacité, une pile à combustible ou une combinaison de ceux-ci.
- le véhicule de traction électrique étant un véhicule bi-tensions, ledit véhicule comporte un dispositif continu propre à collecter une puissance auprès d'une source continue externe et à appliquer une tension continue sur le premier et/ou le second bus continu des première et seconde chaines d'alimentation.
- le dispositif continu est relié, via un dispositif d'isolement continu, à un nœud situé sur la liaison électrique entre les premier et second bus continus.
- le premier et/ou le second onduleur est propre à fonctionner en convertisseur triphasé - continu pour transformer une puissance triphasée générée par le premier et/ou le second moteur fonctionnant en freinage et à appliquer la tension continue obtenue sur le premier et/ou le second bus continu des première et seconde chaines d'alimentation.
- une première borne du dispositif de stockage d'énergie électrique est connectée à un point porté à un potentiel de référence et une seconde borne du dispositif de stockage d'énergie électrique est connectée à un nœud, d'où est issue une première maille de connexion à une entrée du premier convertisseur au travers du premier interrupteur, et une seconde maille de connexion à une entrée du second convertisseur au travers du second interrupteur.
- le véhicule de traction électrique est un véhicule ferroviaire.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés sur lesquels :
[Fig 1] La figure 1 est une représentation électrique schématique d'une locomotive bi-tensions équipée d'un dispositif de stockage d'énergie électrique, selon l'état de la technique ; et,
[Fig 2] la figure 2 est une représentation électrique schématique d'une locomotive bi-tensions équipée d'un dispositif de stockage d'énergie selon l'invention.

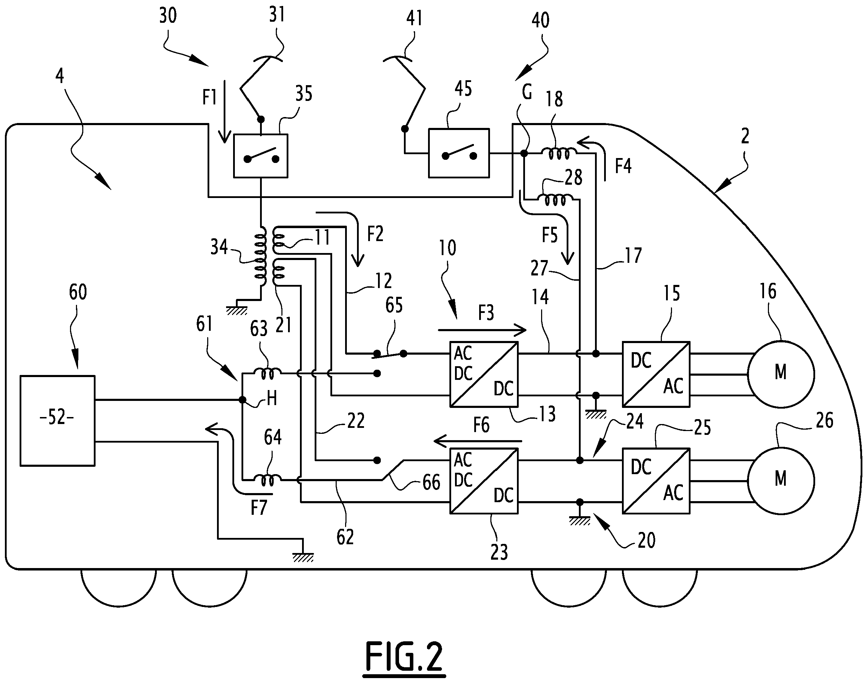

Un mode de réalisation particulier de l'invention va être présenté en se référant à la figure 2, sachant qu'un composant de la figure 2 identique à un composant de la figure 1 (relative à l'art antérieur) est référencé en utilisant le même chiffre de référence.

De manière générale, aussi bien la figure 1 que la figure 2 représentent une locomotive 2 en tant qu'exemple de véhicule de traction électrique.

La locomotive 2 comporte un circuit de puissance 4 pour l'alimentation des moteurs électriques de traction 16 et 26 de la locomotive 2.

Sur les figures, des premier et second moteurs 16 et 26 sont représentés, mais la locomotive 2 pourrait en comporter un plus grand nombre.

Chaque moteur est alimenté en puissance électrique par une chaîne d'alimentation dédiée. Ainsi, la locomotive 2 comporte une première chaîne d'alimentation 10 connectée électriquement au premier moteur 16 et une seconde chaîne d'alimentation 20 connectée électriquement au second moteur 26.

La première chaîne d'alimentation 10 comporte un premier enroulement 11, un premier circuit 12, un premier convertisseur 13, un premier bus continu 14, et un premier onduleur 14.

Le premier enroulement 11 correspond au secondaire d'un transformateur 34.

L'enroulement 11 est connecté par le premier circuit 12 aux bornes d'entrée du premier convertisseur 13. Le premier convertisseur 13 est propre à fonctionner en convertisseur monophasé - continu (ou AC / DC), de manière à convertir une tension monophasée appliquée en entrée en une tension continue délivrée en sortie.

Les bornes de sortie du premier convertisseur 13 sont connectées au premier bus continu 14.

Le premier bus continu 14 comporte une ligne fixe, portée à un potentiel de référence du véhicule, et une ligne flottante.

Le premier bus continu 14 est connecté aux bornes d'entrée du premier onduleur 15. Ce dernier est propre à fonctionner en convertisseur continu - triphasé (ou DC/AC), de manière à convertir une tension continue appliquée en entrée en une tension triphasée, de fréquence variable, délivrée en sortie.

Les sorties du premier onduleur 15 sont connectées aux phases du premier moteur 16.

De manière similaire, la seconde chaîne d'alimentation 20 comporte un second enroulement 21, un second circuit 12, un second convertisseur 13, un second bus continu 14, et un second onduleur 14.

Le second enroulement 21 correspondant au secondaire du transformateur 34.

L'enroulement 21 est connecté par le second circuit 22 aux bornes d'entrée du second convertisseur 23. Le second convertisseur 23 est propre à fonctionner en convertisseur monophasé - continu (ou AC/DC), de manière à convertir une tension monophasée appliquée en entrée en une tension continue délivrée en sortie.

Les bornes de sortie du second convertisseur 23 sont connectées au second bus continu 24.

Le second bus continu 24 comporte une ligne fixe, connectée au potentiel de référence du véhicule, et une ligne flottante.

Le second bus continu 24 est connecté aux bornes d'entrée du second onduleur 25. Ce dernier est propre à fonctionner en convertisseur continu - triphasé (ou DC/AC), de manière à convertir une tension continue appliquée en entrée en une tension triphasée de fréquence variable délivrée en sortie.

Les sorties du second onduleur 25 sont connectées aux phases du second moteur 26.

La locomotive 2 est du type bi-tensions. Le circuit de puissance 4 permet par conséquent de capter soit une tension monophasée, soit une tension continue depuis une ligne aérienne de contact, telle qu'une caténaire (non représentée sur les figures).

Pour le captage de la tension monophasée, le circuit de puissance 4 comporte un dispositif monophasé 30, sur le toit de la locomotive 2. Ce dispositif monophasé 30 comporte un premier pantographe dédié au captage d'une tension monophasée, ou pantographe monophasé 31.

Le pantographe monophasé 31 est relié électriquement, au travers d'un dispositif d'isolement monophasée 35, à une première borne du primaire du transformateur 34. Le dispositif d'isolement monophasé 35 peut être dans l'état ouvert ou dans l'état fermé.

La seconde borne du primaire du transformateur 34 est connectée électriquement au potentiel de référence du véhicule.

Pour le captage d'une tension continue, le circuit de puissance 4 comporte un dispositif continu 40, sur le toit de la locomotive 2. Le dispositif continu 40 comporte un second pantographe dédié au captage d'un courant continu, ou pantographe continu 41.

Le pantographe continu 41 est relié électriquement, au travers d'un dispositif d'isolement continu 45, à un nœud G. Le dispositif d'isolement 45 peut être dans l'état ouvert ou dans l'état fermé.

A partir du nœud G, une première maille 17, intégrant un composant de découplage (tel qu'une inductance 18) et éventuellement un interrupteur, est reliée à la ligne flottante du premier bus continu 14.

A partir du nœud G, une seconde maille 27, intégrant un composant de découplage (tel qu'une inductance 28), est reliée à la ligne flottante du second bus continu 24.

Il est à noter que le courant continu sur l'un et/ou l'autre bus continu peut être utilisé pour alimenter des systèmes auxiliaires de la locomotive ou du train (air conditionné, éclairage,...).

D'autres équipements peuvent également être prévus, tels que par exemple des dispositifs contre la foudre, des moyens d'isolement des pantographes, des systèmes de mesure des puissances captées, des moyens de filtrage, etc.

La locomotive 2 embarque un dispositif de stockage d'énergie électrique propre à délivrer une tension électrique continue entre ses bornes de sortie.

Le dispositif de stockage d'énergie électrique 60 selon l'invention (figure 2) diffère du dispositif de stockage d'énergie électrique 50 selon l'art antérieur (figure 1) en ce qu'il comporte uniquement un moyen de stockage d'énergie électrique, tel qu'une batterie 52. Il est ainsi dépourvu d'un convertisseur de tension dédié (convertisseur DC - DC de l'art antérieur).

En variante d'une batterie, peuvent être mis en œuvre des supercapacités, des piles à combustible, ou tout autre moyen de stockage d'énergie électrique connu de l'homme du métier. Plusieurs moyens de stockage d'énergie électrique peuvent également être combinés, qu'ils soient de même nature ou de nature différente.

Selon l'invention, la batterie 52 comporte une borne fixe, qui est connectée électriquement au potentiel de référence du véhicule.

La batterie 52 comporte une borne flottante qui est connectée à un nœud H.

A partir du nœud H, une première maille 61, intégrant une inductance 63, est reliée, par un premier interrupteur 65, à une borne d'entrée du premier convertisseur 13.

A partir du nœud H, une seconde maille 62, intégrant une inductance 64, est reliée, par un second interrupteur 66, à une borne d'entrée du second convertisseur 23.

Le premier interrupteur 65 peut être dans un état « haut » connectant le premier enroulement 11 au premier convertisseur 13 ou dans un état « bas » connectant la batterie 52 au premier convertisseur 13.

Le second interrupteur 66 peut être dans un état « haut » connectant le second enroulement 21 au second convertisseur 23 ou dans un état « bas » connectant la batterie 52 au second convertisseur 23.

La locomotive 2 peut fonctionner selon différents modes.

Dans un premier mode, dit mode de traction sous tension monophasée, le circuit de puissance 4 permet l'utilisation d'une puissance monophasée captée par le premier dispositif monophasé 30 (typiquement de 25 kV AC) pour alimenter les moteurs fonctionnant en traction. Dans ce mode, le dispositif 35 est placé dans l'état fermé, le dispositif 45 est placé dans l'état ouvert et les interrupteurs 65 et 66 sont placés dans l'état « haut ». Dans ces conditions, le courant monophasé collecté par le pantographe 31 est alors appliqué au primaire du transformateur 34. La tension monophasée générée au secondaire sur le premier enroulement 11, respectivement sur le second enroulement 21, est convertie par le premier convertisseur 13 fonctionnant alors en convertisseur AC / DC, respectivement par le second convertisseur 23 fonctionnant alors en convertisseur AC / DC, en une tension continue sur le premier bus continu 14, respectivement sur le second bus continu 24. La tension continue sur le premier bus 14, respectivement le second bus 24, est ensuite transformée en une tension triphasée par le premier onduleur 15, respectivement de second onduleur 25, pour alimenter le premier moteur 16, respectivement le second moteur 26.

Dans un second mode, dit mode de traction sous tension continue, le circuit de puissance 4 permet l'utilisation d'une puissance continue captée par le second dispositif continu 40 (typiquement de 1,5 kV DC) pour alimenter les moteurs fonctionnant en traction. Dans ce mode, le dispositif 35 est placé dans l'état ouvert, le dispositif 45 est placé dans l'état fermé et les interrupteurs 65 et 66 sont placés dans l'état « haut ». Dans ces conditions, la tension continue collectée par le pantographe continu 41 est appliquée en entrée du premier onduleur 15, respectivement du second onduleur 25, au travers du premier bus continu 14, respectivement du second bus continue 24. La tension continue sur le premier bus 14, respectivement le second bus 24, est ensuite transformée en une tension triphasée par le premier onduleur 15, respectivement de second onduleur 25, pour alimenter le premier moteur 16, respectivement le second moteur 26.

Dans un troisième mode, dit mode de traction sur batterie, le circuit de puissance 4 permet l'utilisation d'une puissance continue délivrée par la batterie 52 (typiquement de 1,5 kV DC) pour alimenter les moteurs fonctionnant en traction. Dans ce mode, le dispositif 35 est placé dans l'état ouvert, le dispositif 45 est placé dans l'état ouvert et les premier et second interrupteurs 65 et 66 sont placés dans l'état « bas ». Dans ces condition, la tension continue délivrée par la batterie 52 est appliquée en entrée des premier et second convertisseurs 13 et 23 fonctionnant alors en convertisseurs continu - continu (ou DC / DC). En sortie, la tension continue sur le premier bus 14, respectivement le second bus 24, est transformée en une tension triphasée par le premier onduleur 15, respectivement de second onduleur 25, pour alimenter le premier moteur 16, respectivement le second moteur 26.

Dans un quatrième mode, dit mode hybride sous tension monophasée, le circuit de puissance 4 permet la recharge de la batterie 52 à partir du courant monophasé capté par le premier dispositif 30.

Dans ce mode, le premier interrupteur 65 est placé dans l'état « haut », tandis que le second interrupteur est placé dans l'état « bas ». Parallèlement, le dispositif 35 est placé dans l'état fermé, et le dispositif 45 est placé dans l'état ouvert.

Dans ces conditions, la tension monophasée collectée par le pantographe 31 est appliquée au primaire du transformateur 34 (flèche F1 sur la figure 2). La tension monophasée générée au secondaire sur le premier enroulement 11 est appliquée en entrée du premier convertisseur 13 (flèche F2). Ce dernier, fonctionnant en monophasé - continu (le convertisseur 13 fonctionne alors en convertisseurs AC/DC), converti la tension monophasée en une tension continue sur le premier bus continu 14 (flèche F3).

La tension continue sur la ligne flottante du premier bus continu 14 est alors acheminée le long de la première maille 17 vers le nœud G (flèche F4), puis le long de la seconde maille 27 vers la ligne flottante du second bus 24 (flèche F5).

La tension continue sur le second bus 24 est alors convertie en une tension continue par le second convertisseur 23 fonctionnant en continu - continu inverse (flèche F6).

La tension continue délivrée par le second convertisseur 23 est finalement appliquée en entrée de la batterie 52 pour la recharger (flèche F7).

Ce mode de fonctionnement est utilisable lorsque le besoin de puissance de traction est faible.

C'est notamment le cas lorsque les moteurs ne fonctionnent pas en traction, par exemple lors d'un arrêt du véhicule en station. Les premier et second onduleurs sont alors inactivés.

C'est également le cas lorsque les moteurs fonctionnent en freinage. La puissance alors générée par les moteurs est récupérée, au moins en partie, et stockée dans la batterie 52. Le premier et/ou second onduleur est alors activé en convertisseur triphasé - continu pour transformer la tension triphasée en sortie du premier et/ou second moteur, en tension continue sur le premier et/ou second bus continu. La tension continue sur la ligne flottante du premier bus continu 14 est acheminée via le nœud G vers la ligne flottante du second bus 24. La tension continue sur le second bus 24 est convertie en une tension continue par le second convertisseur 23 fonctionnant en continu - continu inverse et la tension continue délivrée par le second convertisseur 23 est appliquée en entrée de la batterie 52 pour la recharge.

C'est enfin le cas, lorsque le premier moteur fonctionne en traction (le premier onduleur étant activé en convertisseur continu - triphasé), mais qu'une partie de la puissance sur le premier bus continu peut être prélevée pour recharger la batterie sans dégrader notablement la fonction de traction.

Un cinquième mode, dit mode hybride sous tension continue, le circuit de puissance 4 permet l'utilisation soit d'une puissance continue délivrée par la batterie pour alimenter les moteurs, soit d'une puissance continue captée par le second dispositif continu 40 pour recharger la batterie 52.

Dans ce mode, le dispositif 35 est placé dans l'état ouvert, le dispositif 45 est placé dans l'état fermé, et les premier et second interrupteurs 65 et 66 sont placés dans l'état « bas».

Dans le cas où de la puissance est fournie par la batterie 52 pour alimenter la traction : La tension continue délivrée par la batterie 52 est appliquée en entrée des premier et second convertisseurs 13 et 23 qui la convertissent en tension continue sur le premier bus 14, respectivement le second bus 24 (les convertisseurs 13 et 23 fonctionnent alors en convertisseurs DC/DC) ; Cette puissance fournie par la batterie sert, éventuellement en complément d'une puissance fournie par la caténaire, à alimenter les premier et seconds moteurs de traction 16 et 26.

Dans le cas où de la puissance est fournie par la caténaire pour recharger la batterie : La tension continue sur le premier bus 14 est alors convertie en une tension continue par le premier convertisseur 13 fonctionnant en continu - continu inverse ; La tension continue sur le second bus 24 est aussi convertie en une tension continue par le second convertisseur 23 fonctionnant en continu - continu inverse ; La tension continue délivrée par les deux convertisseurs 13 et 23 est finalement appliquée en entrée de la batterie 52 pour la recharger.

Ce mode de fonctionnement est utilisable lorsque le besoin de puissance de traction est faible.

C'est notamment le cas lorsque les moteurs ne fonctionnent pas en traction, par exemple lors d'un arrêt du véhicule en station. Les premier et second onduleurs sont alors inactivés.

C'est également le cas lorsque les moteurs fonctionnent en freinage. La puissance alors générée par les moteurs est récupérée, au moins en partie, et stockée dans la batterie 52. Le premier et/ou second onduleur est alors activé en convertisseur triphasé - continu pour transformer la tension triphasée en sortie du premier et/ou second moteur, en tension continue sur le premier et/ou second bus continu. La tension continue sur le premier et/ou second bus continu est convertie en une tension continue par le premier et/ou second convertisseur fonctionnant en continu - continu inverse. Finalement, et la tension continue délivrée par le premier et/ou second convertisseur est appliquée en entrée de la batterie 52 pour la recharger.

C'est enfin le cas, lorsque le premier et/ou le second moteur fonctionne en traction (le premier et/ou le second onduleur étant activé en convertisseur continu - triphasé), mais qu'une partie de la puissance sur le premier et/ou sur le second bus continu peut être prélevée pour recharger la batterie sans dégrader notablement la fonction de traction.

L'homme du métier constatera que le système de traction selon l'invention permet de s'affranchir de la mise en œuvre d'un convertisseur continu-continu dédié entre le moyen de stockage d'énergie électrique et chacun des bus continus.

Il permet par conséquent de moderniser facilement et à moindre coût une locomotive bicourant/bi-tensions existante, par l'adjonction de moyens de stockage d'énergie électrique.

En variante, la locomotive est non pas bicourant mais tricourant, pouvant capter par exemple plusieurs types de courants monophasés et/ou plusieurs types de courants continus au moyens de pantographes adaptés.

On notera qu'un onduleur, 15, 25, est activé pour fonctionner : soit en continu - triphasé - DC / AC (et réguler le couple de traction du moteur) ; soit en triphasé - continu - AC / DC (et réguler le couple en freinage du moteur).

On notera qu'un convertisseur, 13, 23, est piloté pour fonctionner: soit en monophasé - continu, AC-DC, pour convertir une tension monophasée en une tension continue en régulant la tension de sortie ; soit en continu - continu direct, DC - DC direct, c'est-à-dire en hacheur élévateur de tension pour convertir une tension basse en une tension plus haute, le pilotage pouvant se faire en régulant la tension de sortie (troisième mode) ou en en régulant un courant, la tension bus étant alors imposée par ailleurs, par exemple par la caténaire (cinquième mode) ; soit en continu - continu inverse, DC-DC inverse, c'est-à-dire en hacheur abaisseur de tension, pour convertir une tension haute en une tension plus basse en régulant un courant, la tension de sortie étant celle imposée par la batterie (c'est le cas du cinquième mode).

## Revendications

1. Véhicule à traction électrique (2) comportant :
- un premier moteur (16) connecté à une première chaîne d'alimentation en puissance électrique (10), la première chaîne d'alimentation comportant : un premier convertisseur (13) adapté pour fonctionner en convertisseur monophasé - continu pour convertir une tension monophasée appliquée en entrée en une tension continue délivrée en sortie ; un premier onduleur (15) propre à convertir une tension continue appliquée en entrée en une tension triphasée délivrée en sortie pour alimenter le premier moteur (16) fonctionnant en traction ; et un premier bus continu (14) connecté entre la sortie du premier convertisseur (13) et l'entrée du premier onduleur (15) ;
- un second moteur (26) connecté à une seconde chaîne d'alimentation (20), la seconde chaîne étant distincte de la première chaîne, la seconde chaîne d'alimentation comportant : un second convertisseur (23) adapté pour fonctionner en convertisseur monophasé - continu pour convertir une tension monophasée appliquée en entrée en une tension continue délivrée en sortie ; un second onduleur (25) propre à convertir une tension continue appliquée en entrée en une tension triphasée délivrée en sortie pour alimenter le second moteur (26) fonctionnant en traction ; et un second bus continu (24) connecté entre la sortie du second convertisseur (23) et l'entrée du second onduleur (25) ;
- un dispositif monophasé (30) adapté pour collecter une puissance auprès d'une source monophasée externe au véhicule de traction électrique et appliquer une tension monophasée en entrée du premier et/ou du second convertisseur (13, 23) des première et seconde chaînes d'alimentation (10, 20) ; et,
- une liaison électrique entre les premier et second bus continus (14, 24) des première et seconde chaines d'alimentation (10, 20),
**caractérisé en ce que** le second convertisseur (23) est adapté pour être piloté pour fonctionner soit en monophasé - continu soit en continu - continu direct, et **en ce que** le véhicule de traction électrique (2) comporte, en outre, un dispositif de stockage d'énergie électrique (60) connecté en entrée du second convertisseur (23), via un second interrupteur (66), le second interrupteur étant soit dans un état « haut » pour connecter le dispositif monophasé (30) en entrée du second convertisseur (23), soit dans un état « bas » pour connecter le dispositif de stockage d'énergie électrique (60) en entrée du second convertisseur (23),
le véhicule de traction électrique (2) étant capable de fonctionner dans un mode de recharge du dispositif de stockage d'énergie électrique (60) en pilotant le second interrupteur (66) dans l'état « bas », de sorte qu'une tension monophasée appliquée par le dispositif monophasé (30) en entrée du premier convertisseur (13) fonctionnant en monophasé - continu soit convertie en une tension continue sur le premier bus continu ; que la tension continue sur le premier bus continu soit appliquée au second bus continu à travers la liaison électrique entre les premier et second bus continus ; et que la tension continue sur le second bus continu soit convertie par le second convertisseur (23) fonctionnant en continu - continu inverse, en une tension continue de recharge du dispositif de stockage d'énergie électrique (60).

2. Véhicule selon la revendication 1, dans lequel, le premier convertisseur (13) étant adapté pour être piloté pour fonctionner soit en monophasé - continu soit en continu - continu direct, le dispositif de stockage d'énergie électrique (60) est connecté en entrée du premier convertisseur (13), via un premier interrupteur (65), le premier interrupteur (65) étant soit dans un état « haut » pour connecter le dispositif monophasé (30) en entrée du premier convertisseur (13), soit dans un état « bas » pour connecter le dispositif de stockage d'énergie (52) en entrée du premier convertisseur (13), le véhicule de traction électrique (2) opérant dans le mode de recharge du dispositif de stockage d'énergie électrique : soit en pilotant le premier interrupteur dans l'état « haut » et le second interrupteur dans l'état « bas », de sorte qu'une tension monophasée appliquée par le dispositif monophasé (30) en entrée du premier convertisseur (13) fonctionnant en monophasé - continu soit convertie en une tension continue sur le premier bus continu, que la tension continue sur le premier bus continu soit appliquée au second bus continu à travers la liaison électrique entre les premier et second bus continus, et que la tension continue sur le second bus continu soit convertie par le second convertisseur (23) fonctionnant en continu - continu inverse en une tension continue de recharge du dispositif de stockage d'énergie électrique ; soit en pilotant le premier interrupteur dans l'état « bas » et le second interrupteur dans l'état « haut », de sorte qu'une tension monophasée appliquée par le dispositif monophasé en entrée du second convertisseur (23) fonctionnant en monophasé - continu soit convertie en une tension continue sur le second bus continu, que la tension continue sur le second bus continu soit appliquée au premier bus continu à travers la liaison électrique entre les premier et second bus continus, et que la tension continue sur le premier bus continu soit convertie par le premier convertisseur (13) fonctionnant en continu - continu inverse, en une tension continue de recharge du dispositif de stockage d'énergie électrique.

3. Véhicule selon la revendication 2, adapté pour fonctionner dans un mode de traction en utilisant une puissance délivrée par le dispositif de stockage d'énergie électrique afin d'alimenter les premier et second moteurs, le véhicule de traction électrique comportant un dispositif d'isolement monophasé (35) permettant d'isoler le dispositif monophasé (30) des premier et second convertisseurs (13, 23) et les premier et second interrupteurs étant pilotés dans l'état « bas » de manière à appliquer une tension continue délivrée par le dispositif de stockage d'énergie (60) en entrée des premier et second convertisseurs (13, 23) fonctionnant en convertisseur continu - continu direct.

4. Véhicule selon l'une quelconque des revendications 1 à 3, dans lequel le dispositif de stockage d'énergie électrique (60) est dépourvu de convertisseur continu-continu dédié.

5. Véhicule selon l'une quelconque des revendications 1 à 4, dans lequel le dispositif de stockage d'énergie électrique (60) comporte une batterie, une supercapacité, une pile à combustible ou une combinaison de ceux-ci.

6. Véhicule selon l'une quelconque des revendications 1 à 5, dans lequel, le véhicule de traction électrique étant un véhicule bi-tensions, ledit véhicule comporte un dispositif continu (40) propre à collecter une puissance auprès d'une source continue externe et à appliquer une tension continue sur le premier et/ou le second bus continu (14, 24) des première et seconde chaines d'alimentation (10, 20).

7. Véhicule selon la revendication 6, dans lequel le dispositif continu (40) est relié, via un dispositif d'isolement continu (45), à un nœud (G) situé sur la liaison électrique entre les premier et second bus continus (14, 24).

8. Véhicule selon l'une quelconque des revendications 1 à 7, dans lequel le premier et/ou le second onduleur (15, 16) est propre à fonctionner en convertisseur triphasé - continu pour transformer une puissance triphasée générée par le premier et/ou le second moteur fonctionnant en freinage et à appliquer la tension continue obtenue sur le premier et/ou le second bus continu (14, 24) des première et seconde chaines d'alimentation (10, 20).

9. Véhicule selon la revendication 2 ou 3, dans lequel une première borne du dispositif de stockage d'énergie électrique (60) est connectée à un point porté à un potentiel de référence et une seconde borne du dispositif de stockage d'énergie électrique (60) est connectée à un nœud (H), d'où est issue une première maille (61) de connexion à une entrée du premier convertisseur (13) au travers du premier interrupteur (65), et une seconde maille (64) de connexion à une entrée du second convertisseur (23) au travers du second interrupteur (66).

10. Véhicule selon l'une quelconque des revendications précédentes, dans lequel le véhicule de traction électrique est un véhicule ferroviaire.
